# EUROPEAN PATENT APPLICATION

(11) **EP 2 892 242 A1**
(43) Date of publication of application: **08.07.2015**
(21) Application number: 13841911.4
(22) Date of filing: 02.09.2013
(51) Int. Cl.: H04N 21/458, H04N 21/435, H04N 21/414

(54) **UPDATE METHOD FOR MOBILE PHONE TELEVISION SERVICE GUIDE, MOBILE TELEVISION PLATFORM AND TERMINAL**

(30) Priority: 29.09.2012 CN 201210376464
(71) Applicant: ZTE Corporation, Shenzhen, Guangdong 518057 (CN)
(72) Inventor: LIANG, Wenbin, Shenzhen Guangdong 518057 (CN); CAO, Jinbo, Shenzhen Guangdong 518057 (CN)
(74) Representative: Schröer, Gernot H.
(86) International application number: PCT/CN2013/082792
(87) International publication number: WO 2014/048222

(57) **Abstract**

A method for updating a mobile phone television service guide, a mobile phone television platform and a terminal are disclosed. The method for updating a mobile phone television service guide includes: a mobile phone television platform acquiring synchronous service guide information from an Electronic Service Guide (ESG), the service guide information including channel information and program information; the mobile phone television platform dividing the service guide information into different types of fragments according to a data model of the service guide information, and updating the service guide information based on the different types of fragments; and the mobile phone television platform issuing updated service guide information to a terminal. In the embodiments of the present invention, fragmentation processing is performed on a service guide acquired synchronously from an ESG based on a data model of service guide information, enabling a terminal side to update the service guide information with the classification of the fragments, which largely reduces the information quantity for the ESG to synchronize the service guide and the processing load of the terminal.

## Description

### Technical Field

The present invention relates to the technical field of mobile phone television service guide, and in particular, to a method for updating a mobile phone television service guide, a mobile phone television platform, and a terminal.

### Background of the Related Art

The mobile phone television service guide provides a detailed mobile phone television program to a user and is presented on the terminal. The user may select his/her favorite channels or programs to view according to the service guide. The service guide plays an important role in the mobile phone television system, and the response speed of the acquired service information directly influences the subsequent operation of the terminal on the mobile phone television service and the user experience.

At present, the update of the service guide is periodically triggered and synchronized by the radio and television Electronic Service Guide (ESG), and relates to service guide information such as channels, programs, plans and interactions etc. With the enrichment and expansion of the service information such as channels and programs etc. of the mobile phone television, the information quantity is increasing, which results in long time of the terminal downloading and parsing the service guide from the mobile phone television platform, and sometimes due to excessive information quantity of the service guide downloaded by the terminal, when the network condition is poor, the terminal fails to update the service guide information, and the user experience is poor.

### Summary of the Invention

In the process of implementing the present invention, the inventor discovers the following disadvantages in the related technology:

The radio and television ESG primarily synchronizes the service guide information and the terminal parses the mobile phone television service guide information with reference to the 3^{rd} part of the mobile multimedia broadcasting of the China Mobile Multimedia Broadcasting (CMMB) standard. The standard has an unreasonable design of the mobile phone television service data model. This results in frequent update of most service guide data, which increases the information quantity for the radio and television ESG to synchronize the service guide data, thereby also increasing the processing load of the terminal.

The embodiments of the present invention provide a method for updating a mobile phone television service guide, a mobile phone television platform, and a terminal, to overcome the defect that it needs a lot of workload to synchronously acquire the current service guide information from the radio and television ESG by the mobile phone television platform and update the service guide by the terminal.

The embodiments of the present invention provide a method for updating a mobile phone television service guide, comprising:
a mobile phone television platform acquiring synchronous service guide information from an Electronic Service Guide (ESG), the service guide information including channel information and program information;
the mobile phone television platform dividing the service guide information into different types of fragments according to a data model of the service guide information, and updating the service guide information based on the different types of fragments; and
the mobile phone television platform issuing updated service guide information to a terminal.

Preferably, the data model of the service guide information comprises a stable state type of data model, a normal state type of data model, and a dynamic state type of data model, and types and definitions of various types of service data structures which are amended according to different types of data models.

Preferably, judgment bases of methods of classification of data models are added respectively in the definitions of the various types of service data structures.

Preferably, the stable state type of data model, the normal state type of data model, and the dynamic state type of data model, and types and definitions of various types of service data structures are described in an explicit or implicit manner.

Preferably, the mobile phone television platform updating the service guide information based on the different types of fragments comprises:
the mobile phone television platform judging whether the service guide information is created the first time, and if so, creating the stable state information fragments of the service guide information, and then performing the same operation as an operation when the service guide information is not created the first time; and if not, judging whether there are normal state information fragments of the service guide information, and if so, updating the normal state information fragments of the service guide information, and then performing the same operation as an operation when there are no normal state information fragments, and if not, updating dynamic state information fragments of the service guide information.

Preferably, the mobile phone television platform updating normal state information fragments or dynamic state information fragments of the service guide information comprises:
the mobile phone television platform correspondingly updating the normal state information fragments or dynamic state information fragments of the service guide information in an explicit or implicit manner.

The embodiments of the present invention further provide a method for updating a mobile phone television service guide, comprising:
a terminal receiving service guide information issued by a mobile phone television platform; and
the terminal parsing the service guide information to acquire different types of fragments of the service guide information, and completing update of the service guide information based on the different types of fragments.

Preferably, the different types of fragments of the service guide information comprise stable state information fragments, normal state information fragments, and dynamic state information fragments.

Preferably, the stable state information fragments, the normal state information fragments, and the dynamic state information fragments are described as explicit or implicit information.

Preferably, the terminal completing update of the service guide information based on the different types of fragments comprises:
the terminal judging whether the service guide information is created the first time, and if so, solidifying the stable state information fragments of the service guide information, and then performing the same operation as an operation when the service guide information is not created the first time; and if not, judging whether there are normal state information fragments of the service guide information, and if so, updating the normal state information fragments of the service guide information, and then performing the same operation as an operation when there are no normal state information fragments, and if not, updating dynamic state information fragments of the service guide information.

Preferably, the terminal updating normal state information fragments or dynamic state information fragments of the service guide information comprises:
the terminal correspondingly updating the normal state information fragments or dynamic state information fragments of the service guide information in an explicit or implicit manner.

The embodiments of the present invention further provide a mobile phone television platform, comprising:
an acquisition module, configured to acquire synchronous service guide information from an Electronic Service Guide (ESG), the service guide information including channel information and program information;
an update module, configured to divide the service guide information into different types of fragments according to a data model of the service guide information, and update the service guide information based on the different types of fragments; and
a transmission module, configured to issue updated service guide information to a terminal by the mobile phone television platform.

Preferably, the data model of the service guide information comprises a stable state type of data model, a normal state type of data model, and a dynamic state type of data model, and types and definitions of various types of service data structures which are amended according to different types of data models.

Preferably, judgment bases of mobile phone television platforms of classification of data models are added respectively in the definitions of the various types of service data structures.

Preferably, the stable state type of data model, the normal state type of data model, and the dynamic state type of data model, and types and definitions of various types of service data structures are described in an explicit or implicit manner.

Preferably, the update module is configured to judge whether the service guide information is created the first time, and if so, create the stable state information fragments of the service guide information, and then perform the same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

Preferably, the update module is configured to correspondingly update the normal state information fragments or dynamic state information fragments of the service guide information in an explicit or implicit manner.

The embodiments of the present invention further provide a terminal, comprising:
a reception module, configured to receive service guide information issued by a mobile phone television platform; and
an update module, configured to parse the service guide information to acquire different types of fragments of the service guide information, and complete update of the service guide information based on the different types of fragments.

Preferably, the different types of fragments of the service guide information comprise stable state information fragments, normal state information fragments, and dynamic state information fragments.

Preferably, the stable state information fragments, the normal state information fragments, and the dynamic state information fragments are described as explicit or implicit information.

Preferably, the update module is configured to judge whether the service guide information is created the first time, and if so, solidify the stable state information fragments of the service guide information, and then perform the same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

Preferably, the update module is configured to correspondingly update the normal state information fragments or dynamic state information fragments of the service guide information in an explicit or implicit manner.

In the embodiments of the present invention, fragmentation processing is performed on a service guide acquired synchronously from an ESG based on a data model of service guide information, enabling a terminal side to update the service guide information with the classification of the fragments, which largely reduces the information quantity for the ESG to synchronize the service guide and the processing load of the terminal. Especially with the large increase in the mobile phone television service information, the effect is more obvious, while enhancing the flexibility of the synchronization of the ESG.

### Brief Description of Drawings

- Fig. 1: is a diagram of different types of fragments which are used according to an embodiment of the present invention;
- Fig. 2: is a flowchart of an embodiment of a method for updating a mobile phone television service guide based on effective fragments according to the present invention;
- Fig. 3: is a structural diagram of an embodiment of a mobile phone television platform according to the present invention; and
- Fig. 4: is a structural diagram of an embodiment of a terminal according to the present invention.

### Preferred Embodiments of the Present Invention

The embodiments of the present invention will be described in detail hereinafter with reference to accompanying drawings. It should be illustrated that in the case of no conflict, the embodiments of this application and the features in the embodiments could be combined randomly with each other.

The embodiments of the present invention provide a method for updating a mobile phone television service guide, which will be described from the mobile phone television platform side. The method comprises the following steps.

In step 11, a mobile phone television platform acquires synchronous service guide information from an Electronic Service Guide (ESG), the service guide information including channel information and program information;
in step 12, the mobile phone television platform divides the service guide information into different types of fragments according to a data model of the service guide information, and updates the service guide information based on the different types of fragments;
wherein, the data model of the service guide information comprises a stable state type of data model, a normal state type of data model, and a dynamic state type of data model, and types and definitions of various types of service data structures which are amended according to different types of data models; judgment bases of methods of classification of data models are added respectively in the definitions of the various types of service data structures; and the stable state type of data model, the normal state type of data model, and the dynamic state type of data model, and types and definitions of various types of service data structures are described in an explicit or implicit manner.

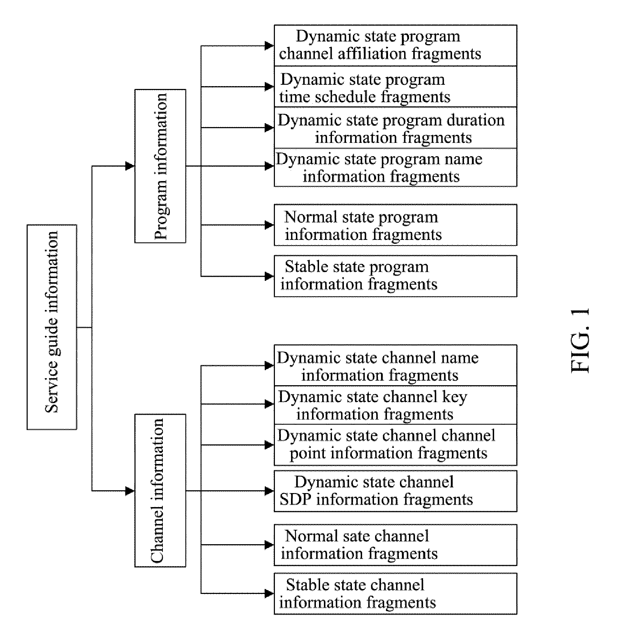

Specifically, as shown in Fig. 1, different types of fragments used in the present embodiment primarily comprise:
(1) fragments corresponding to channel information
   the channels primarily comprise all channel information of the service guide, and the channel information may be divided into the following fragments:
   stable state channel information fragments, which primarily comprise basic information of the channels which is stable and is not changed, which needs not to be changed once the channels are created;
   normal state channel information fragments, which primarily comprise some information of the channels in a normal state, which is only changed in a special scenario after the channels are created, and is generally not changed, but support change;
   dynamic channel SDP information fragments, which primarily comprise SDP information of the channels which is dynamically changed frequently;
   dynamic channel frequency point information fragments, which primarily comprise channel frequency point information which is dynamically changed frequently;
   dynamic channel key information fragments, which primarily comprise channel key information which is dynamically changed frequently;
   dynamic channel name information fragments, which primarily comprise channel name information which is dynamically changed frequently;
(2) fragments corresponding to program information
   the programs primarily comprise all program information of the service guide, which may be divided into the following fragments:
   stable state program information fragments, which primarily comprise basic information of the programs which is stable and is not changed, which needs not to be changed once the programs are created;
   normal state program information fragments, which primarily comprise some information of the programs in a normal state, which is only changed in a special scenario after the programs are created, and is generally not changed, but support change;
   program name information fragments, which primarily comprise program name information which is dynamically changed frequently;
   program duration information fragments, which primarily comprise program duration information which is dynamically changed frequently;
   program time schedule information fragments, which primarily comprise program time schedule information which is dynamically changed frequently;
   program channel affiliation information fragments, which primarily comprise program channel affiliation information which is dynamically changed frequently.

In step 13, the mobile phone television platform issues updated service guide information to a terminal.

In addition, the embodiment of the present invention further provides a method for updating a mobile phone television service guide, which is described from the terminal side. The method comprises the following steps.

In step 21, a terminal receives service guide information issued by a mobile phone television platform; and
in step 22, the terminal parses the service guide information to acquire different types of fragments of the service guide information, and completes update of the service guide information based on the different types of fragments.

Wherein, the different types of fragments of the service guide information comprise stable state information fragments, normal state information fragments, and dynamic state information fragments; and the stable state information fragments, the normal state information fragments, and the dynamic state information fragments are described as explicit or implicit information.

The technical schemes of the embodiments of the present invention will be described in detail below from the perspective of interaction between the mobile phone television platform and the terminal side.

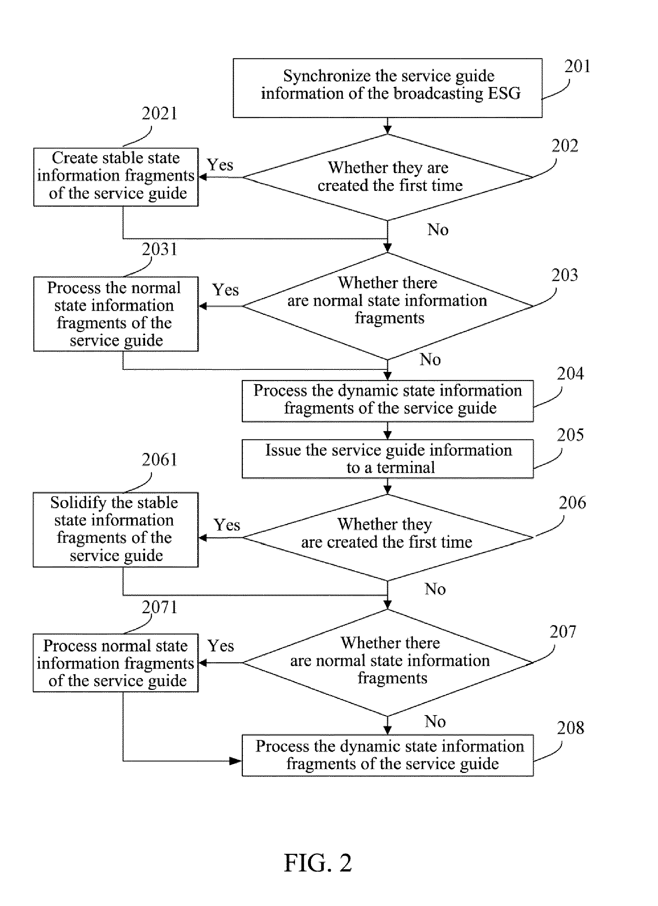

As shown in Fig. 2, illustrated is a flowchart of an embodiment of a method for updating a mobile phone television service guide based on effective fragments according to the present invention. The flowchart comprises the following steps.

In step 201, a mobile phone television platform acquires synchronous service guide information from a radio and television ESG, the service guide information including channel information and program information;
in step 202, it is judged whether the service guide information such as channels, programs etc. of the service guide is created the first time; and information such as channels, programs etc. of the service guide synchronized by the radio and television ESG is created the first time, step 2021 is performed; otherwise, step 203 is performed;
in step 2021, stable state information fragments of the service guide information such as channels, programs etc. are created;
in step 203, it is judged whether there are normal state information fragments of the channels and programs of the service guide synchronized from the radio and television ESG; and if so, step 2031 is performed; otherwise, step 204 is performed;
in step 2031, normal state information fragments of the service guide information such as channels, programs etc. are updated;
in step 204, dynamic state information fragments of the service guide information such as channels, programs etc. are updated;
in step 205, the mobile phone television platform issues the service guide information to the terminal;
in step 206, the terminal judges whether the issued information such as channels, programs etc. of the service guide is created the first time; and if the issued information such as channels, programs etc. of the service guide is created the first time, step 2061 is performed, and the process ends; otherwise, step 207 is performed;
in step 2061, the stable state information fragments of the service guide information such as channels, programs etc. are solidified at the terminal side, and the stable state information fragments are not changed after the solidification;
in step 207, it is judged whether there are normal state information fragments of the issued channels, programs of the service guide; and if so, step 2071 is performed; otherwise, step 208 is performed;
in step 2071, the normal state information fragments of the service guide information such as channels, programs etc. are updated;
in step 208, the dynamic state information fragments of the service guide information such as channels, programs etc. are updated, and the process ends.

The update operation in the above steps 2031, 204, 2071 or 208 may be completed in an explicit or implicit manner.

In the above method for updating a mobile phone television service guide, fragmentation processing is performed on a service guide acquired synchronously from a radio and television ESG based on a data model of service guide information, enabling a terminal side to update the service guide information with the classification of the fragments, which largely reduces the information quantity for the radio and television ESG to synchronize the service guide and the processing load of the terminal. Especially with the large increase in the mobile phone television service information, the effect is more obvious, while largely improving user experience and enhancing the flexibility of the synchronization of the radio and television ESG.

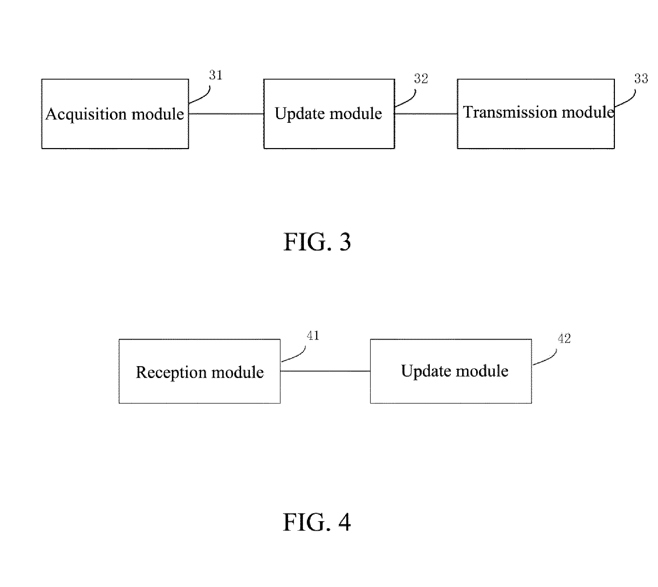

As shown in Fig. 3, illustrated is a structural diagram of an embodiment of a mobile phone television platform according to the present invention. The mobile phone television platform comprises an acquisition module 31, an update module 32, and a transmission module 33, wherein,
the acquisition module is configured to acquire synchronous service guide information from an Electronic Service Guide (ESG), the service guide information including channel information and program information;
the update module is configured to divide the service guide information into different types of fragments according to a data model of the service guide information, and update the service guide information based on the different types of fragments; and
the transmission module is configured to issue updated service guide information to a terminal by the mobile phone television platform.

Wherein, the data model of the service guide information comprises a stable state type of data model, a normal state type of data model, and a dynamic state type of data model, and types and definitions of various types of service data structures which are amended according to different types of data models; judgment bases of mobile phone television platforms of classification of data models are added respectively in the definitions of the various types of service data structures; the stable state type of data model, the normal state type of data model, and the dynamic state type of data model, and types and definitions of various types of service data structures are described in an explicit or implicit manner.

In addition, the update module is specifically configured to judge whether the service guide information is created the first time, and if so, create the stable state information fragments of the service guide information, and then perform the same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

Further, the update module is specifically configured to correspondingly update the normal state information fragments or dynamic state information fragments of the service guide information in an explicit or implicit manner.

In the above mobile phone television platform, fragmentation processing is performed on a service guide acquired synchronously from an ESG based on a data model of service guide information, enabling a terminal side to update the service guide information with the classification of the fragments, which largely reduces the information quantity for the ESG to synchronize the service guide and the processing load of the terminal. Especially with the large increase in the mobile phone television service information, the effect is more obvious, while largely improving the user experience, and enhancing the flexibility of the synchronization of the ESG.

As shown in Fig. 4, illustrated is a structural diagram of an embodiment of a terminal according to the present invention. The terminal comprises a reception module 41 and an update module 42, wherein,
the reception module is configured to receive service guide information issued by a mobile phone television platform; and
the update module is configured to parse the service guide information to acquire different types of fragments of the service guide information, and complete update of the service guide information based on the different types of fragments.

Wherein, the different types of fragments of the service guide information comprise stable state information fragments, normal state information fragments, and dynamic state information fragments; and the stable state information fragments, the normal state information fragments, and the dynamic state information fragments are described as explicit or implicit information.

In addition, the update module is specifically configured to judge whether the service guide information is created the first time, and if so, solidify the stable state information fragments of the service guide information, and then perform the same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

Further, the update module is specifically configured to correspondingly update the normal state information fragments or dynamic state information fragments of the service guide information in an explicit or implicit manner.

In the above terminal, different types of fragments of the service guide information are acquired by interaction with the mobile phone television platform, and the service guide information is updated with the classification of the fragments, which largely reduces the information quantity for the ESG to synchronize the service guide and the processing load of the terminal. Especially with the large increase in the mobile phone television service information, the effect is more obvious, while largely improving the user experience, and enhancing the flexibility of the synchronization of the ESG.

A person having ordinary skill in the art should understand that all or a part of the steps in the above method can be implemented by programs instructing related hardware, and the programs can be stored in a computer readable storage medium, such as a read-only memory, a disk, or a disc etc. Alternatively, all or a part of the steps in the aforementioned embodiments can also be implemented with one or more integrated circuits. Accordingly, various modules/units in the aforementioned embodiments can be implemented in a form of hardware, or can also be implemented in a form of software functional modules. The present invention is not limited to any particular form of combination of hardware and software.

The above embodiments are not all embodiments, and are only a part of embodiments of the present invention. The present invention is not limited to the mobile phone television service guide information such as channels, programs etc. described in the embodiments. An ordinary skilled in the art should understand that amendments or equivalent substitutions can be made to the technical schemes of the present invention, without departing from the sprit and scope of the technical schemes of the present invention, which should be covered in the scope of the claims of the present invention.

### Industrial Applicability

In the embodiments of the present invention, fragmentation processing is performed on a service guide acquired synchronously from an ESG based on a data model of service guide information, enabling a terminal side to update the service guide information with the classification of the fragments, which largely reduces the information quantity for the ESG to synchronize the service guide and the processing load of the terminal. Especially with the large increase in the mobile phone television service information, the effect is more obvious, while enhancing the flexibility of the synchronization of the ESG.

## Claims

1. A method for updating a mobile phone television service guide, comprising:
a mobile phone television platform acquiring synchronous service guide information from an Electronic Service Guide (ESG), the service guide information including channel information and program information;
the mobile phone television platform dividing the service guide information into different types of fragments according to a data model of the service guide information, and updating the service guide information based on the different types of fragments; and
the mobile phone television platform issuing updated service guide information to a terminal.

2. The method according to claim 1, wherein,
the data model of the service guide information comprises a stable state type of data model, a normal state type of data model, and a dynamic state type of data model, and types and definitions of various types of service data structures which are amended according to different types of data models.

3. The method according to claim 2, wherein,
judgment bases of methods of classification of data models are added respectively in the definitions of the various types of service data structures.

4. The method according to claim 2, wherein,
the stable state type of data model, the normal state type of data model, and the dynamic state type of data model, and types and definitions of various types of service data structures are described in an explicit or implicit manner.

5. The method according to any one of claims 2-4, wherein,
the mobile phone television platform updating the service guide information based on the different types of fragments comprises:
the mobile phone television platform judging whether the service guide information is created first time, and if so, creating the stable state information fragments of the service guide information, and then performing a same operation as an operation when the service guide information is not created the first time; and if not, judging whether there are normal state information fragments of the service guide information,
and if so, updating the normal state information fragments of the service guide information, and then performing the same operation as an operation when there are no normal state information fragments, and if not,
updating dynamic state information fragments of the service guide information.

6. The method according to claim 5, wherein,
the mobile phone television platform updating normal state information fragments or dynamic state information fragments of the service guide information comprises:
the mobile phone television platform correspondingly updating the normal state information fragments or dynamic state information fragments of the service guide information in an explicit or implicit manner.

7. A method for updating a mobile phone television service guide, comprising:
a terminal receiving service guide information issued by a mobile phone television platform; and
the terminal parsing the service guide information to acquire different types of fragments of the service guide information, and completing update of the service guide information based on the different types of fragments.

8. The method according to claim 7, wherein,
the different types of fragments of the service guide information comprise stable state information fragments, normal state information fragments, and dynamic state information fragments.

9. The method according to claim 8, wherein,
the stable state information fragments, the normal state information fragments, and the dynamic state information fragments are described as explicit or implicit information.

10. The method according to claim 8 or 9, wherein,
the terminal completing update of the service guide information based on the different types of fragments comprises:
the terminal judging whether the service guide information is created first time, and if so, solidifying the stable state information fragments of the service guide information, and then performing a same operation as an operation when the service guide information is not created the first time;
and if not, judging whether there are normal state information fragments of the service guide information, and if so, updating the normal state information fragments of the service guide information, and then performing the same operation as an operation when there are no normal state information fragments, and if not, updating dynamic state information fragments of the service guide information.

11. The method according to claim 10, wherein,
the terminal updating normal state information fragments or dynamic state information fragments of the service guide information comprises:
the terminal correspondingly updating the normal state information fragments or dynamic state information fragments of the service guide information in an explicit or implicit manner.

12. A mobile phone television platform, comprising:
an acquisition module, configured to acquire synchronous service guide information from an Electronic Service Guide (ESG), the service guide information including channel information and program information;
an update module, configured to divide the service guide information into different types of fragments according to a data model of the service guide information, and update the service guide information based on the different types of fragments; and
a transmission module, configured to issue updated service guide information to a terminal by the mobile phone television platform.

13. The mobile phone television platform according to claim 12, wherein, the data model of the service guide information comprises a stable state type of data model, a normal state type of data model, and a dynamic state type of data model, and types and definitions of various types of service data structures which are amended according to different types of data models.

14. The mobile phone television platform according to claim 13, wherein, judgment bases of mobile phone television platforms of classification of data models are added respectively in the definitions of the various types of service data structures.

15. The mobile phone television platform according to claim 13, wherein, the stable state type of data model, the normal state type of data model, and the dynamic state type of data model, and types and definitions of various types of service data structures are described in an explicit or implicit manner.

16. The mobile phone television platform according to any one of claims 13-15, wherein,
the update module is configured to judge whether the service guide information is created first time, and if so, create the stable state information fragments of the service guide information, and then perform a same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

17. The mobile phone television platform according to claim 16, wherein, the update module is configured to correspondingly update the normal state information fragments or dynamic state information fragments of the service guide information in an explicit or implicit manner.

18. A terminal, comprising:
a reception module, configured to receive service guide information issued by a mobile phone television platform; and
an update module, configured to parse the service guide information to acquire different types of fragments of the service guide information, and
complete update of the service guide information based on the different types of fragments.

19. The terminal according to claim 18, wherein,
the different types of fragments of the service guide information comprise stable state information fragments, normal state information fragments, and dynamic state information fragments.

20. The terminal according to claim 19, wherein,
the stable state information fragments, the normal state information fragments, and the dynamic state information fragments are described as explicit or implicit information.

21. The terminal according to claim 19 or 20, wherein,
the update module is configured to judge whether the service guide information is created first time, and if so, solidify the stable state information fragments of the service guide information, and then perform a same operation as an operation when the service guide information is not created the first time; and if not, judge whether there are normal state information fragments of the service guide information, and if so, update the normal state information fragments of the service guide information, and then perform the same operation as an operation when there are no normal state information fragments, and if not, update dynamic state information fragments of the service guide information.

22. The terminal according to claim 21, wherein,
the update module is configured to correspondingly update the normal state information fragments or dynamic state information fragments of the service guide information in an explicit or implicit manner.
